# FASCICULE DE BREVET EUROPEEN

(11) **EP 3 615 989 B1**
(45) Date de publication et mention de la délivrance du brevet: **18.03.2026**
(21) Numéro de dépôt: 18720265.0
(22) Date de dépôt: 27.04.2018
(51) Int. Cl.: G02B 27/28, G02B 27/01

(54) **PROCÉDÉ DE PILOTAGE D'UN AFFICHEUR TÊTE-HAUTE ET AFFICHEUR TÊTE-HAUTE**
VERFAHREN ZUR STEUERUNG EINER HEAD-UP-ANZEIGE SOWIE HEAD-UP-ANZEIGE
METHOD FOR CONTROLLING A HEAD-UP DISPLAY AND HEAD-UP DISPLAY

(30) Priorité: 28.04.2017 FR 1753789
(43) Date de publication de la demande: 04.03.2020
(73) Titulaire: Valeo Comfort and Driving Assistance, 94000 Créteil (FR)
(72) Inventeur: HUSSON, Arnaud, 94046 Créteil Cedex (FR); GRANDCLERC, François, 94046 Créteil Cedex (FR)
(74) Mandataire: Delplanque, Arnaud
(86) Numéro de dépôt international: PCT/EP2018/060978
(87) Numéro de publication internationale: WO 2018/197711

(56) Documents cités:
- FR-A1- 3 015 704
- US-A1- 2008 068 520
- US-A1- 2014 152 711

## Description

### DOMAINE TECHNIQUE AUQUEL SE RAPPORTE L'INVENTION

La présente invention concerne de manière générale le domaine des afficheurs tête-haute.

Elle s'applique en particulier à un afficheur tête-haute pour véhicule automobile, comprenant :
- un boîtier,
- une unité de génération d'images disposée dans le boîtier, qui comprend une source de lumière et qui est adaptée à émettre un faisceau lumineux transportant des images,
- un système de projection adapté à projeter lesdites images dans le champ de vision du conducteur du véhicule automobile,
- une unité d'atténuation de l'intensité lumineuse du faisceau lumineux, et
- une unité de pilotage de l'unité d'atténuation et de l'unité de génération d'images.

Elle concerne plus particulièrement un procédé de pilotage d'un tel afficheur tête-haute, qui comprend :
- une étape d'élaboration d'une consigne de pilotage de la source de lumière,
- une étape d'élaboration d'une consigne de pilotage de l'unité d'atténuation, et
- une étape de pilotage de ladite source de lumière et de ladite unité d'atténuation selon les deux consignes de pilotage.

### ARRIÈRE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute adapté à afficher des informations (vitesse du véhicule, direction à suivre, présence d'obstacle, ...) à la hauteur du regard du conducteur.

Un tel afficheur tête-haute comprend généralement une unité de génération d'images qui produit un faisceau lumineux transportant des images, et un combineur qui projette ces images dans le champ de vision du conducteur.

L'afficheur tête-haute doit pouvoir être utilisé de jour comme de nuit. Cependant les spécifications d'intensité lumineuse de l'image ne sont pas les mêmes pour un roulage diurne que pour un roulage nocturne.

En effet, pour que les informations affichées soient visibles lors d'un roulage diurne, l'intensité lumineuse de l'image doit être élevée. Elle est typiquement supérieure à 15000 cd/m². Lors d'un roulage nocturne, l'intensité lumineuse de l'image doit au contraire être très faible afin de ne pas éblouir le conducteur.

Pour réduire cette intensité lumineuse, il est par exemple connu de diminuer le courant d'alimentation de la source de lumière de l'unité de génération d'images.

Cette méthode présente deux inconvénients majeurs.

Le premier inconvénient est qu'elle ne permet pas de réduire autant que souhaité l'intensité lumineuse pour un roulage nocturne.

Le second inconvénient est que dans le cas où des diodes électroluminescentes sont utilisées comme sources lumineuses dans l'unité de génération d'images, on assiste à une variation de couleur du faisceau émis quand le courant d'alimentation est bas. En effet, la colorimétrie des diodes électroluminescente dépend de l'intensité de leur courant d'alimentation.

Pour remédier à ces problèmes, on connait du document FR3015704 un système qui comprend une unité de génération d'images laser, un polariseur actif conçu pour faire varier l'orientation de la polarisation du faisceau lumineux, et un polariseur passif. Les deux polariseurs permettent alors de réduire l'intensité lumineuse du faisceau lumineux qui les traverse.

L'inconvénient de ce système est qu'il génère de gros échauffements.

### OBJET DE L'INVENTION

Afin de remédier à l'inconvénient précité de l'état de la technique, la présente invention propose un procédé de pilotage tel que défini dans la revendication 1.

En atténuant l'intensité du faisceau lumineux émis par la source de lumière au moyen d'une unité d'atténuation, on agit sur cette intensité lumineuse de façon distincte de l'alimentation en courant de la source de lumière, et on dispose ainsi de plus grandes possibilités de réduction de l'intensité lumineuse. Par conséquent, on peut à la fois disposer d'une forte luminosité diurne et d'une faible luminosité nocturne.

En diminuant l'intensité électrique d'alimentation de la source de lumière et en atténuant aussi l'intensité lumineuse émise par la source de lumière, on peut réduire au mieux l'intensité lumineuse des images affichées sans perte de couleurs, et en réduisant au mieux les problèmes d'échauffement.

D'autres caractéristiques avantageuses et non limitatives du procédé de pilotage conforme à l'invention sont les suivantes :
- lorsque ledit paramètre est égal à ladite valeur de seuil minimum, ledit taux d'atténuation présente une seconde valeur qui varie en fonction de la luminosité extérieure ;
- la consigne de pilotage de la source de lumière est élaborée de façon à ce que ledit faisceau lumineux soit émis par l'unité de génération d'images avec une intensité lumineuse qui est constante lorsque ledit paramètre égal à ladite valeur de seuil minimum, et qui varie lorsque ledit paramètre est supérieur à ladite valeur de seuil minimum ;
- la consigne de pilotage de l'unité d'atténuation permet de commander une variation de l'orientation de la polarisation du faisceau lumineux au sein de l'unité d'atténuation ;
- ledit paramètre est relatif ou est égal à l'intensité du courant électrique d'alimentation de la source de lumière ;
- la consigne de pilotage de la source de lumière comprend un rapport cyclique relatif à une largeur d'impulsion d'un courant électrique d'alimentation de la source de lumière, et la valeur de seuil minimum est une valeur de rapport cyclique ; et
- le rapport cyclique étant piloté par un moyen de régulation du courant,

le courant électrique en entrée dudit moyen de régulation est inférieur à une valeur maximale recommandée pour l'alimentation en courant de la source de lumière.

L'invention propose également un afficheur tête-haute tel que défini en introduction, dont l'unité de pilotage est adaptée à mettre en œuvre un procédé tel que défini ci-dessus.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un afficheur tête-haute conforme à l'invention,
- les figures 2A et 2B sont des vues schématiques d'une unité de génération d'images et d'une unité d'atténuation de l'afficheur tête-haute de la figure 1, représentées dans deux états distincts.

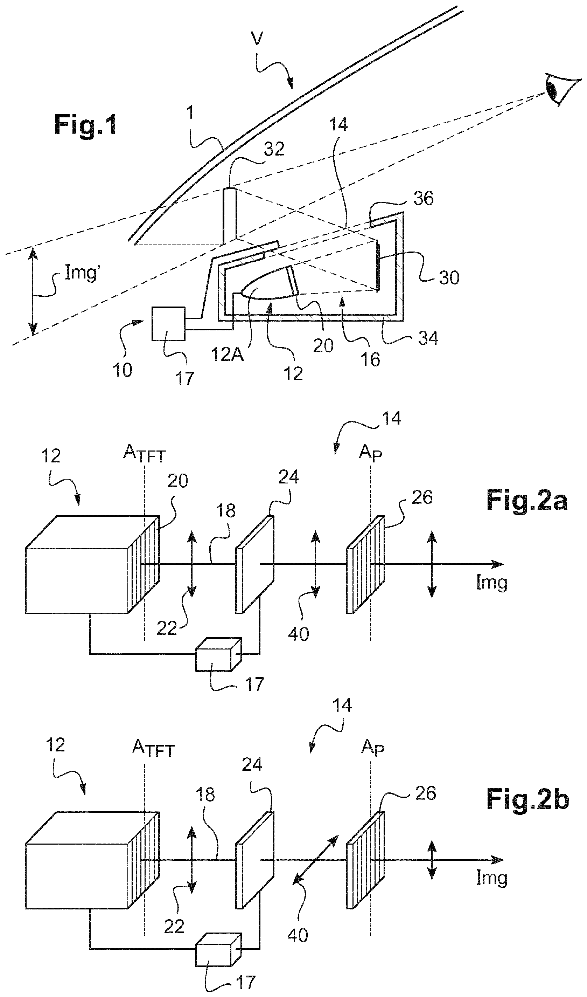

Sur la figure 1, on a représenté schématiquement un afficheur tête-haute 10 qui est destiné à équiper un véhicule V, par exemple un véhicule automobile, pour afficher des images dans le champ de vision du conducteur de ce véhicule V.

En préliminaire, on notera que les termes « faisceau lumineux » et « image » seront utilisés de façon similaire. En effet, le faisceau lumineux transporte les images et il présente une intensité lumineuse qui définit l'intensité lumineuse de l'image.

Les termes « amont » et « aval » seront par ailleurs utilisés compte tenu du sens de propagation du faisceau lumineux, depuis la zone dans laquelle il est généré jusqu'à l'extérieur de l'afficheur tête-haute 10.

L'afficheur tête-haute 10 comprend un boîtier 34 qui loge une unité de génération d'images 12, une unité d'atténuation 14, un ensemble optique de projection 16 et un calculateur 17 adapté à piloter l'unité de génération d'images 12 et l'unité d'atténuation 14.

L'unité de génération d'images 12 comprend une source de lumière 12A qui émet un faisceau lumineux 18 (représenté sur les figures 2A et 2B). Ici, la source de lumière comprend au moins une diode électroluminescente (LED). En pratique, elle comporte plusieurs diodes électroluminescentes réparties dans un même plan, sur plusieurs lignes et sur plusieurs colonnes.

L'unité de génération d'images 12 comprend en outre une unité de formation d'images.

L'unité de formation d'image comprend un écran. L'écran est ici un écran à cristaux liquides (ou LCD pour "*Liquid Crystal Display*") *à* transistors en couche mince (ou TFT pour "*Thin-Film Transistor*")*.* Cet écran, ci-après appelé écran TFT 20, est placé parallèlement au plan dans lequel les diodes électroluminescentes sont réparties.

L'écran TFT 20 permet de modifier le faisceau lumineux 18 de façon à ce que ce dernier « transporte » des images.

De manière classique, comme le montrent les figures 2A et 2B, l'écran TFT 20 polarise la lumière selon un axe de polarisation A_{TFT}. Dans cet exemple, l'orientation de l'axe de polarisation A_{TFT} de l'écran TFT 20 est verticale mais en variante, elle pourrait bien sûr être horizontale, ou avoir une orientation intermédiaire. Le faisceau lumineux 18 sortant de l'unité de génération d'images 12 présente donc une polarisation verticale.

L'unité d'atténuation 14 est placée en aval de l'unité de génération d'images 12.

Elle est prévue pour pouvoir, si cela s'avère nécessaire, réduire l'intensité lumineuse du faisceau lumineux 18 lorsque celui-ci la traverse.

Dans l'exemple représenté sur les figures, l'unité d'atténuation 14 comprend un polariseur actif 24 et un unique polariseur passif 26 placé ici en aval du polarisateur actif 24.

Le polariseur actif 24 est apte à modifier l'orientation de la polarisation du faisceau lumineux 18 au sein de l'unité d'atténuation 14, sous le contrôle d'un signal électrique. Le polariseur actif 24 comprend ici une cellule à cristaux liquides commandée par le calculateur 17.

Le polariseur passif 26 est configuré pour transmettre uniquement une des composantes de la polarisation du faisceau lumineux 18. Le polariseur passif 26 présente ici un axe de polarisation A_{P} parallèle à celui de l'écran TFT 20, c'est-à-dire vertical. Le polariseur passif 26 comprend par exemple un film polarisant rectiligne inerte.

Comme le montre la figure 2A, en absence de modification de l'orientation de polarisation initiale 22 du faisceau lumineux par le polariseur actif 24, l'unité d'atténuation 14 permet une transmission proche de 100% de l'intensité lumineuse du faisceau lumineux 18. L'intensité lumineuse du faisceau lumineux 18 n'est donc pas atténuée. Le taux d'atténuation est donc considéré égal à zéro.

Comme le montre la figure 2B, lorsque l'orientation de polarisation initiale 22 du faisceau lumineux 18 est modifiée par le polariseur actif 24, l'unité d'atténuation 14 permet de réduire l'intensité lumineuse du faisceau lumineux 18. Le taux d'atténuation de l'intensité lumineux est alors d'autant plus grand que l'orientation de polarisation initiale 22 du faisceau lumineux 18 est modifiée.

On notera ici que le polariseur passif 26 permet de protéger l'écran TFT 20 du soleil en filtrant partiellement la lumière du soleil entrant dans le boîtier 34.

L'ensemble optique de projection 16 est ici placé en aval de l'unité d'atténuation 14.

Chaque image Img générée par l'unité de génération d'images 12 se propage alors vers l'ensemble optique de projection 16 de façon à être projetée dans le champ de vision du conducteur lorsque le regard de ce dernier est tourné vers la route.

L'ensemble optique de projection 16 est plus précisément conçu pour projeter une image virtuelle Img' dans le champ de vision du conducteur du véhicule, à une distance du conducteur qui est supérieure à celle séparant le conducteur du pare-brise 1 (si bien que les yeux du conducteur n'ont pas à effectuer de travail d'accommodation pour percevoir les informations projetées).

L'ensemble optique de projection 16 comporte à cet effet un système optique de renvoi 30 et un combineur 32 placé dans le champ de vision du conducteur du véhicule.

Le système optique de renvoi 30 comporte ici uniquement un miroir de repliement, logé dans le boîtier 34. Le miroir de repliement 30 peut être plan ou peut présenter une surface complexe de type asphérique.

Le miroir de repliement 30 permet de renvoyer l'image Img générée par l'unité de génération d'images 12 vers le combineur 32.

Le boitier 34 présente à cet effet une fenêtre 36 configurée pour permettre à l'image Img de se propager vers le combineur 32.

Pour protéger l'écran TFT 20, par exemple de la poussière, on peut prévoir d'obturer la fenêtre 36 par un couvercle vitré (communément appelé « cover window », en anglais). Ce couvercle vitré peut en variante être situé entre l'écran TFT 20 et le système optique de renvoi 30.

Toutefois, dans l'exemple illustré sur les figures, l'unité d'atténuation 14 remplace le couvercle vitré. Elle est ici placée de façon à fermer entièrement la fenêtre 36. Réduire le nombre d'éléments optiques de l'afficheur tête-haute permet de limiter les pertes en transmission du faisceau lumineux 18.

Le combineur 32 permet de réfléchir l'image Img de telle manière qu'elle apparaisse au conducteur comme si elle était affichée à une grande distance de ce dernier. Dans l'exemple illustré sur la figure 1, le combineur 32 comporte une plaque partiellement réfléchissante.

Ici, ce combineur 32 est de préférence disposé dans l'habitacle du véhicule automobile, entre le pare-brise 1 du véhicule V et les yeux du conducteur.

En variante, le pare-brise 1 lui-même pourrait faire office de combineur.

Le calculateur 17 de l'afficheur tête-haute 10 forme une unité de pilotage de l'unité d'atténuation 14 et de l'unité de génération d'images 12.

Ce calculateur 17 est apte à élaborer et à délivrer des consignes de pilotage permettant de faire varier l'intensité lumineuse du faisceau lumineux 18 vu par le conducteur. Pour cela, le calculateur 17 est configuré pour modifier, d'une part, le courant d'alimentation de la source de lumière 12A, et, d'autre part, le courant de commande du polariseur actif 24.

Ce calculateur comporte à cet effet un processeur, une mémoire et différentes interfaces d'entrée et de sortie.

Grâce à ses interfaces d'entrée, le calculateur 17 est adapté à recevoir des signaux d'entrée. Typiquement, il peut recevoir un signal relatif à la luminosité extérieure (c'est-à-dire relatif à l'intensité de la lumière provenant de l'extérieur du véhicule, notamment de la lumière du soleil).

Grâce à ses interfaces de sortie, le calculateur 17 est adapté à commander la source de lumière 12A et le polariseur actif 24.

Grâce à sa mémoire, le calculateur peut stocker une application informatique, constituée de programmes d'ordinateur comprenant des instructions dont l'exécution par le processeur permet la mise en œuvre par le calculateur du procédé qui sera décrit ci-après.

Lorsque l'afficheur tête-haute 10 est démarré, le faisceau lumineux 18 est émis par la source de lumière 12A, il traverse l'écran TFT 20 de façon à transporter des images Img, il traverse l'unité d'atténuation 14 de façon à ce que son intensité lumineuse soit éventuellement réduite, puis il est projeté dans le champ de vision du conducteur.

Le calculateur 17 est configuré pour faire varier l'intensité lumineuse du faisceau lumineux 18 vu par le conducteur.

L'objectif est que cette intensité lumineuse soit plus faible dans des conditions de conduite nocturne que dans des conditions de conduite diurne.

On pourrait prévoir de jouer pour cela uniquement sur l'intensité d'alimentation de la source de lumière 12A, dont on rappelle qu'elle est composée de diodes électroluminescentes.

Toutefois, une diode électroluminescente présente des recommandations d'utilisation correspondant à un fonctionnement nominal. Les recommandations d'utilisation comprennent par exemple un intervalle d'intensité d'alimentation recommandé en dehors duquel le fonctionnement nominal de la diode électroluminescente n'est pas garanti.

L'intervalle est délimité entre une valeur maximale (au-delà de laquelle la diode électroluminescente risque de s'endommager) et une valeur minimale (en deçà de laquelle les performances de la diode électroluminescente sont dégradées). La valeur minimale de l'intensité du courant d'alimentation est par exemple de 250mA.

Dans le cadre de l'invention, la colorimétrie nominale des LED est la caractéristique de fonctionnement nominal qui présente le plus d'intérêt. Or, la longueur d'onde d'émission de la diode électroluminescente variant en deçà de l'intervalle de courant d'alimentation recommandé, la colorimétrie nominale n'est plus respectée en deçà de cet intervalle.

On comprend donc qu'il n'est pas possible de garantir un bon fonctionnement de l'afficheur tête-haute 10 avec une intensité du courant d'alimentation inférieure à 250mA.

Or, avec cette intensité électrique, le faisceau lumineux 18 présente une intensité lumineuse trop grande dans des conditions de conduite nocturne. C'est la raison pour laquelle il est ici prévu en outre une unité d'atténuation 14 permettant de réduire encore l'intensité lumineuse des images Img vues par le conducteur du véhicule V.

Le procédé de pilotage de l'afficheur tête-haute 10 est alors mis en œuvre en trois étapes, dont une première étape d'élaboration d'une consigne de pilotage de la source de lumière 12A, une seconde étape d'élaboration d'une consigne de pilotage de l'unité d'atténuation 14, et une troisième étape de pilotage de la source de lumière 12A et de l'unité d'atténuation 14 selon ces deux consignes de pilotage.

Selon l'invention, il est prévu de n'utiliser l'unité d'atténuation 14 que lorsque la source de lumière n'est plus en mesure de réduire l'intensité lumineuse émise par les diodes électroluminescentes (sauf à sortir de l'intervalle de courant d'alimentation précité).

Pour cela, selon une caractéristique particulièrement avantageuse de l'invention, il est prévu d'acquérir un paramètre qui est relatif à l'intensité lumineuse du faisceau lumineux 18 (par exemple à sa sortie de la source de lumière 12A), puis d'élaborer la consigne de pilotage de l'unité d'atténuation 14 de façon différente selon que ce paramètre est supérieur ou inférieur à une valeur de seuil minimum.

Plus précisément (en considérant que le paramètre précité est tel qu'il augmente lorsque l'intensité lumineuse augmente) :
- lorsque le paramètre est supérieur à une valeur de seuil minimal, il est prévu au moins de minimiser, voire d'annuler, l'effet de l'unité d'atténuation 14 sur le faisceau lumineux 18, et
- il est prévu sinon de piloter l'unité d'atténuation 14 de façon à ce qu'elle atténue l'intensité lumineuse du faisceau lumineux 18.

On peut maintenant décrire plus précisément la manière selon laquelle ce procédé est mis en œuvre.

Lors de la première étape d'élaboration de la consigne de pilotage de la source de lumière 12A de l'unité de génération d'images 12, la consigne élaborée par le calculateur 17 comporte une consigne d'intensité pour le courant d'alimentation de la source de lumière 12A, de façon à ce que les diodes électroluminescentes émettent une lumière plus ou moins intense.

On pourrait prévoir que la source de lumière 12A soit commandée via une régulation linéaire de l'intensité du courant d'alimentation.

Toutefois, ici, on considérera que la source de lumière 12A est commandée via une régulation de l'intensité du courant par modulation de largeur d'impulsion.

Dans ce cas, la consigne de pilotage de l'intensité lumineuse du faisceau lumineux 18 émis par les diodes électroluminescentes est formée par un rapport cyclique correspondant à une largeur d'impulsion électrique sur une période. En faisant varier ce rapport cyclique, on fait varier l'intensité moyenne du courant d'alimentation des diodes électroluminescentes. Il est donc possible de faire varier l'intensité lumineuse du faisceau lumineux 18 émis par les diodes électroluminescentes.

Le rapport cyclique est piloté par un moyen de régulation du courant. Afin que le courant électrique alimentant la source de lumière (12A) soit inférieur à la valeur maximale de l'intervalle recommandé (au-delà duquel la source de lumière risque d'être endommagée), le courant électrique en entrée dudit moyen de régulation est maintenu à une valeur constante qui est inférieure à cette valeur maximale. Ainsi, pour un rapport cyclique de 100% (correspondant à un courant continu), le courant électrique alimentant la source de lumière est égal au courant électrique en entrée du moyen de régulation, et est donc inférieur à la valeur maximale.

On note que d'une manière générale, les diodes électroluminescentes présentent une durée d'impulsion minimale (et donc un rapport cyclique minimal) en deçà de laquelle leur fonctionnement nominal n'est pas garanti. Ce rapport cyclique minimal limite la diminution de l'intensité lumineuse pouvant être obtenue seulement grâce à la consigne de pilotage des diodes électroluminescentes.

Le « paramètre » précité sera alors formé par ce rapport cyclique. Le seuil minimum est alors choisi compte tenu du rapport cyclique minimal. Il peut ainsi être choisi égal à ce dernier.

Ainsi, selon l'invention, tant que le rapport cyclique sera supérieur à ce seuil minimal, le calculateur 17 ne jouera que sur la consigne de pilotage de la source de lumière 12A pour faire varier l'intensité lumineuse du faisceau lumineux 18. L'unité d'atténuation 14 sera quant à elle pilotée de façon à ce que le polariseur actif 24 ne fasse pas varier l'orientation de la polarisation du faisceau lumineux (cas de la figure 2A).

Pour cela, la tension aux bornes du polariseur actif 24 sera maintenue égale à zéro. Ainsi le polariseur actif 24 ne modifiera-t-il pas l'orientation de polarisation initiale 22 du faisceau lumineux.

L'intensité minimum obtenue de cette manière est donc limitée, d'une part, par la valeur minimale de l'intensité du courant d'alimentation, et, d'autre part, par le rapport cyclique minimal.

De fait, jouer uniquement sur cette consigne de pilotage permet d'atteindre une intensité lumineuse de par exemple 30cd/m². Afin de réduire davantage cette intensité lumineuse, il est prévu d'utiliser l'unité d'atténuation 14.

Plus précisément, lorsque le rapport cyclique devient égal au seuil minimal, le calculateur ne joue que sur la consigne de pilotage de l'unité d'atténuation 14 pour faire varier l'intensité lumineuse du faisceau lumineux 18. La source de lumière 12A est quant à elle pilotée de façon à ce que le rapport cyclique reste égal au seuil minimal (cas de la figure 2B).

Plus précisément, la consigne de pilotage de l'unité d'atténuation 14 permet de commander une variation de l'orientation de la polarisation du faisceau lumineux au sein de l'unité d'atténuation 14.

Pour ce faire, la consigne de pilotage de l'unité d'atténuation 14 permet de faire varier la tension aux bornes de la cellule à cristaux liquides 24.

Cette variation de la tension permet de faire progressivement tourner l'orientation de polarisation initiale 22 du faisceau lumineux qui traverse le polariseur actif 24.

On peut prévoir que cette orientation soit prédéterminée. En variante, on peut prévoir qu'elle varie en fonction de la luminosité extérieure (temps ensoleillé, temps nuageux, temps de brouillard, nuit) ou en fonction de l'heure du jour.

La nouvelle orientation obtenue 42 en sortie de la cellule à cristaux liquides 24 est inclinée par rapport à l'axe de polarisation A_{P} du polariseur d'un angle compris entre 0 et 90 degrés, bornes exclues.

Ce procédé de pilotage de l'afficheur tête-haute 10 permet d'atteindre une intensité lumineuse très basse, par exemple de 1cd/m2 tout en conservant la colorimétrie nominale de la source de lumière et tout en réduisant au mieux les échauffements.

## Revendications

1. Procédé de pilotage d'un afficheur tête-haute (10) pour véhicule automobile (V) qui comprend un boîtier (34) qui comprend une unité de génération d'images (12), comprenant une source de lumière (12A) qui est au moins une diode électroluminescente et une unité de formation d'images qui est un écran à cristaux liquides à transistors en couches minces (20), adaptée à émettre un faisceau lumineux (18) transportant des images (Img), et une unité d'atténuation (14) de l'intensité lumineuse dudit faisceau lumineux (18), ledit procédé de pilotage comprenant :
- une étape d'élaboration d'une consigne de pilotage d'une source de lumière (12A) de l'unité de génération d'images (12),
- une étape d'élaboration d'une consigne de pilotage de l'unité d'atténuation (14),
- une étape de pilotage de ladite source de lumière (12A) et de ladite unité d'atténuation (14) selon les deux consignes de pilotage,
lorsqu'un paramètre qui est relatif à l'intensité lumineuse dudit faisceau lumineux (18) est supérieur à une valeur de seuil minimum, la consigne de pilotage de l'unité d'atténuation (14) est élaborée de façon à ce que le taux d'atténuation de l'intensité lumineuse du faisceau lumineux (18) par l'unité d'atténuation (14) présente une première valeur minimum,
lorsque ledit paramètre est égal à ladite valeur de seuil minimum, la consigne de pilotage de l'unité d'atténuation (14) est élaborée de façon à ce que ledit taux d'atténuation présente une seconde valeur strictement supérieure à la première valeur,
**caractérisé en ce que** l'unité d'atténuation (14) est placée en aval de l'unité de génération d'images (12), et
ladite unité d'atténuation (14) ferme entièrement une fenêtre (36) pratiquée dans le boîtier (34).

2. Procédé de pilotage selon la revendication précédente, dans lequel, lorsque ledit paramètre égal à ladite valeur de seuil minimum, ledit taux d'atténuation présente une seconde valeur qui varie en fonction de la luminosité extérieure.

3. Procédé de pilotage selon l'une des revendications précédentes, dans lequel la consigne de pilotage de la source de lumière (12A) est élaborée de façon à ce que ledit faisceau lumineux (18) soit émis par l'unité de génération d'images (12) avec une intensité lumineuse qui est constante lorsque ledit paramètre est égal à ladite valeur de seuil minimum, et qui varie lorsque ledit paramètre est supérieur à ladite valeur de seuil minimum.

4. Procédé de pilotage selon l'une des revendications précédentes, dans lequel la consigne de pilotage de l'unité d'atténuation (14) permet de commander une variation de l'orientation de la polarisation du faisceau lumineux (18) au sein de l'unité d'atténuation (14).

5. Procédé de pilotage selon l'une des revendications précédentes, dans lequel ledit paramètre est relatif ou est égal à l'intensité du courant électrique d'alimentation de la source de lumière (12A).

6. Procédé de pilotage selon la revendication précédente, dans lequel la consigne de pilotage de la source de lumière (12A) comprend un rapport cyclique relatif à une largeur d'impulsion d'un courant électrique d'alimentation de la source de lumière (12A), et dans lequel la valeur de seuil minimum est une valeur de rapport cyclique.

7. Procédé de pilotage selon la revendication précédente, dans lequel, le rapport cyclique étant piloté par un moyen de régulation du courant, le courant électrique en entrée dudit moyen de régulation est inférieur à une valeur maximale recommandée pour l'alimentation en courant de la source de lumière (12A).

8. Afficheur tête-haute (10) pour véhicule automobile (V), comprenant :
- un boîtier (34),
- une unité de génération d'images (12) disposée dans le boîtier (34), qui comprend une source de lumière (12A), qui est au moins une diode électroluminescente, et qui est adaptée à émettre un faisceau lumineux (18) transportant des images (Img) et une unité de formation d'images qui est un écran à cristaux liquides à transistors en couches minces (20),
- un système de projection (16) adapté à projeter lesdites images (Img) dans le champ de vision du conducteur du véhicule automobile (V),
- une unité d'atténuation (14) de l'intensité lumineuse du faisceau lumineux (18), et
- une unité de pilotage (17) de l'unité d'atténuation (14) et de l'unité de génération d'images (12),
**caractérisé en ce que** l'unité d'atténuation (14) est placée en aval de l'unité de génération d'images (12) et **en ce que** ladite unité de pilotage (17) est adaptée à mettre en œuvre un procédé conforme à l'une des revendications précédentes, et
ladite unité d'atténuation (14) ferme entièrement une fenêtre (36) pratiquée dans le boîtier (34).

9. Afficheur tête-haute (10) selon l'une des deux revendications précédentes, dans lequel ladite unité d'atténuation (14) comprend un unique polariseur passif (26) et un polariseur actif (24) qui est apte à modifier l'orientation de la polarisation du faisceau lumineux (18) au sein de l'unité d'atténuation (14).

## Patentansprüche

1. Verfahren zum Steuern einer Head-up-Anzeige (10) für ein Kraftfahrzeug (V), die ein Gehäuse (34) umfasst, das eine Bilderzeugungseinheit (12) umfasst, mit einer Lichtquelle (12A), die mindestens eine Leuchtdiode ist, und einer Bildgebungsvorrichtung, die ein Flüssigkristallbildschirm mit Dünnschichttransistoren (20) ist, der dazu ausgelegt ist, einen Lichtstrahl (18) auszusenden, der Bilder (Img) transportiert, und eine Einheit (14) zum Abschwächen der Lichtintensität des Lichtstrahls (18) umfasst, wobei das Steuerungsverfahren umfasst:
- einen Schritt zum Erstellen eines Steuerungsbefehls für eine Lichtquelle (12A) der Bilderzeugungseinheit (12),
- einen Schritt zum Erstellen eines Steuerungs-Sollwerts für die Dämpfungseinheit (14),
- einen Schritt zum Steuern der Lichtquelle (12A) und der Dämpfungseinheit (14) gemäß den beiden Steuerungsvorgaben,
wenn ein Parameter, der sich auf die Lichtintensität des Lichtstrahls (18) bezieht, größer als ein Mindestschwellenwert ist, wird der Steuerungsbefehl für die Dämpfungseinheit (14) so erstellt, dass der Dämpfungsgrad der Lichtintensität des Lichtstrahls (18) durch die Dämpfungseinheit (14) einen ersten Mindestwert aufweist,
wenn der Parameter gleich dem Mindestschwellenwert ist, der Steuerungsbefehl der Dämpfungseinheit (14) so festgelegt wird, dass der Dämpfungsgrad einen zweiten Wert aufweist, der streng größer als der erste Wert ist,
**dadurch gekennzeichnet, dass** die Dämpfungseinheit (14) hinter der Bilderzeugungseinheit (12) angeordnet ist und
die Dämpfungseinheit (14) ein im Gehäuse (34) vorgesehenes Fenster (36) vollständig verschließt.

2. Steuerverfahren nach dem vorhergehenden Anspruch, bei dem, wenn der Parameter gleich dem Mindestschwellenwert ist, der Dämpfungsgrad einen zweiten Wert aufweist, der in Abhängigkeit von der Außenhelligkeit variiert.

3. Steuerverfahren nach einem der vorstehenden Ansprüche, bei dem der Steuerungs-Sollwert der Lichtquelle (12A) so festgelegt wird, dass der Lichtstrahl (18) von der Bilderzeugungseinheit (12) mit einer Lichtintensität ausgesendet wird, die konstant ist, wenn der Parameter gleich dem Mindestschwellenwert ist, und die variiert, wenn der Parameter größer als der Mindestschwellenwert ist.

4. Steuerverfahren nach einem der vorstehenden Ansprüche, bei dem der Steuerbefehl für die Dämpfungseinheit (14) eine Änderung der Polarisationsausrichtung des Lichtstrahls (18) innerhalb der Dämpfungseinheit (14) steuert.

5. Steuerungsverfahren nach einem der vorstehenden Ansprüche, wobei der Parameter relativ zur Stromstärke der Stromversorgung der Lichtquelle (12A) ist oder dieser entspricht.

6. Steuerverfahren nach dem vorhergehenden Anspruch, wobei der Steuerungs-Sollwert der Lichtquelle (12A) ein Tastverhältnis in Bezug auf eine Impulsbreite eines elektrischen Versorgungsstroms der Lichtquelle (12A) umfasst und wobei der Mindestschwellenwert ein Tastverhältniswert ist.

7. Steuerverfahren nach dem vorhergehenden Anspruch, wobei das Tastverhältnis durch eine Stromregeleinrichtung gesteuert wird und der elektrische Eingangsstrom der Regeleinrichtung unter einem für die Stromversorgung der Lichtquelle (12A) empfohlenen Maximalwert liegt.

8. Head-up-Display (10) für ein Kraftfahrzeug (V), umfassend:
- ein Gehäuse (34),
- eine Bilderzeugungseinheit (12), die in dem Gehäuse (34) angeordnet ist, die eine Lichtquelle (12A), die mindestens eine Leuchtdiode ist, umfasst und dazu ausgelegt ist, einen Lichtstrahl (18) auszusenden, der Bilder (Img) transportiert, und eine Bildgebungsvorrichtung, die ein Flüssigkristallbildschirm mit Dünnschichttransistoren (20) ist,
- ein Projektionssystem (16), das dazu ausgelegt ist, die genannten Bilder (Img) in das Sichtfeld des Fahrers des Kraftfahrzeugs (V) zu projizieren,
- eine Dämpfungseinheit (14) für die Lichtintensität des Lichtstrahls (18) und
- eine Steuereinheit (17) für die Dämpfungseinheit (14) und die Bilderzeugungseinheit (12),
**dadurch gekennzeichnet, dass** die Dämpfungseinheit (14) hinter der Bilderzeugungseinheit (12) angeordnet ist und dass die Steuereinheit (17) dazu ausgelegt ist, ein Verfahren gemäß einem der vorstehenden Ansprüche durchzuführen, und
die Dämpfungseinheit (14) ein im Gehäuse (34) ausgebildetes Fenster (36) vollständig verschließt.

9. Head-up-Display (10) gemäß einem der beiden vorstehenden Ansprüche, wobei die Dämpfungseinheit (14) einen einzigen passiven Polarisator (26) und einen aktiven Polarisator (24) umfasst, der die Ausrichtung der Polarisation des Lichtstrahls (18) innerhalb der Dämpfungseinheit (14) ändern kann.

## Claims

1. Method for controlling a head-up display (10) for a motor vehicle (V) comprising a housing (34) which includes an image generation unit (12), comprising a light source (12A) which is at least one light-emitting diode and an image formation unit which is a thin-film transistor liquid crystal display (20), adapted to emit a light beam (18) carrying images (Img), and an attenuation unit (14) for attenuating the light intensity of said light beam (18), said driving method comprising:
- a step of developing a control setpoint for a light source (12A) of the image generation unit (12),
- a step of developing a control setpoint for the attenuation unit (14),
- a step of controlling said light source (12A) and said attenuation unit (14) according to the two control setpoints,
when a parameter relating to the light intensity of said light beam (18) is greater than a minimum threshold value, the control setpoint for the attenuation unit (14) is developed so that the attenuation rate of the light intensity of the light beam (18) by the attenuation unit (14) has a first minimum value,
when said parameter is equal to said minimum threshold value, the control setpoint for the attenuation unit (14) is calculated so that said attenuation rate has a second value strictly greater than the first value,
**characterised in that** the attenuation unit (14) is placed downstream of the image generation unit (12), and
said attenuation unit (14) completely closes a window (36) provided in the housing (34).

2. Control method according to the previous claim, in which, when said parameter is equal to said minimum threshold value, said attenuation rate has a second value which varies according to the external brightness.

3. A control method according to one of the preceding claims, wherein the control setpoint for the light source (12A) is calculated such that said light beam (18) is emitted by the image generation unit (12) with a light intensity that is constant when said parameter is equal to said minimum threshold value, and that varies when said parameter is greater than said minimum threshold value.

4. A control method according to one of the preceding claims, wherein the control command for the attenuation unit (14) controls a variation in the polarisation orientation of the light beam (18) within the attenuation unit (14).

5. Control method according to one of the preceding claims, wherein said parameter is related to or is equal to the intensity of the electric current supplying the light source (12A).

6. Control method according to the preceding claim, wherein the control setpoint for the light source (12A) comprises a duty cycle relative to a pulse width of an electric current supplying the light source (12A), and wherein the minimum threshold value is a duty cycle value.

7. Control method according to the previous claim, wherein the duty cycle is controlled by a current regulation means, the electrical current input to said regulation means is less than a maximum value recommended for the power supply to the light source (12A).

8. Head-up display (10) for a motor vehicle (V), comprising:
- a housing (34),
- an image generation unit (12) disposed in the housing (34), which comprises a light source (12A), which is at least one light-emitting diode, and which is adapted to emit a light beam (18) carrying images (Img), and an image formation unit which is a thin-film transistor liquid crystal display (20),
- a projection system (16) adapted to project said images (Img) into the field of vision of the driver of the motor vehicle (V),
- a unit (14) for attenuating the light intensity of the light beam (18), and
- a control unit (17) for the attenuation unit (14) and the image generation unit (12),
**characterised in that** the attenuation unit (14) is located downstream of the image generation unit (12) and **in that** said control unit (17) is adapted to implement a method in accordance with one of the preceding claims, and
said attenuation unit (14) completely closes a window (36) formed in the housing (34).

9. Head-up display (10) according to one of the two preceding claims, wherein said attenuation unit (14) comprises a single passive polariser (26) and an active polariser (24) which is capable of modifying the orientation of the polarisation of the light beam (18) within the attenuation unit (14).
